# EUROPEAN PATENT APPLICATION

(11) **EP 4 851 668 A1**
(43) Date of publication of application: **09.12.2026**
(21) Application number: 25749083.9
(22) Date of filing: 14.01.2025
(51) Int. Cl.: G01S 11/02, G01S 5/02, B60R 25/24

(54) **DIGITAL KEY POSITIONING APPARATUS**

(30) Priority: 30.01.2024 KR 20240014055
(71) Applicant: LG Innotek Co., Ltd., Seoul 07796 (KR)
(72) Inventor: KIM, Jang Seob, Seoul 07796 (KR); BAE, Sung Jun, Seoul 07796 (KR)
(74) Representative: DREISS Patentanwälte PartG mbB
(86) International application number: PCT/KR2025/000774
(87) International publication number: WO 2025/164996

(57) **Abstract**

According to an embodiment, there is provided a digital key location positioning device comprising: a communication unit installed in a vehicle, receiving a plurality of TOF (Time of Flight) values for UWB signals from a plurality of anchors performing UWB communication with a plurality of digital keys; a computation unit calculating distance values between the plurality of anchors and the at least one digital key using TOF values of a UWB signal generated through UWB communication with at least one digital key among the plurality of digital keys; and a location positioning unit calculating location information with the at least one digital key using the distance values.

## Description

### [TECHNICAL FIELD]

One embodiment of the present invention relates to a digital key location positioning device.

### [BACKGROUND ART]

In order to provide LBS (Local Based Service), technologies such as GPS, Wi-Fi, and Bluetooth are being utilized, which have a problem in that precise measurement is difficult; on the other hand, UWB (6~8 GHz, bandwidth of 500 MHz or more) has advantages in that positioning is possible with a wide frequency band, low-power communication, and high accuracy of approximately several tens of centimeters.

The location tracking technology based on GPS and mobile communication networks according to the prior art has an error range of 5 to 50 m and 50 to 200 m, respectively, and in the case of GPS, an obstacle may occur in the propagation of signals transmitted from satellites in urban building clusters.

In the case of Wi-Fi, location tracking is possible at low cost; however, since the used frequency band is narrow, when the number of location tracking targets increases, there may be limitations in channel division. Also, a terminal having mobility may be disconnected from a fixed Wi-Fi AP (access point).

Bluetooth enables deployment of numerous sensors at low cost; however, since the communication latency is large, it is not suitable for real-time location tracking in a dynamic environment.

UWB (Ultra Wide Band) is a technology that utilizes ToF (Time of Flight) technology to multiply the signal arrival time between communicating entities by the speed of light, thereby calculating the distance between the entities.

UWB is a technology for calculating the distance between communicating entities by utilizing ToF (Time of Flight) technology of 6~8 GHz and bandwidth of 500 MHz or more to multiply the signal arrival time between communicating entities by the speed of light.

UWB, unlike Wi-Fi and Bluetooth, uses a wide frequency band, and it is possible to transmit a large amount of information at high transmission speed with low power.

Since UWB performs positioning utilizing only the distance data acquired through the ranging technology, the positioning performance may decrease according to the error in the distance data. Also, there is a problem that physical information of the holder of the digital key, the holding state, and the surrounding environment may affect the signal and cause performance degradation.

### [DISCLOSURE]

### [TECHNICAL PROBLEM]

The technical problem to be achieved by the present invention is to provide a digital key location positioning device capable of improving the accuracy of location positioning.

### [TECHNICAL SOLUTION]

According to an embodiment, there is provided a digital key location positioning device comprising: a communication unit that receives a plurality of TOF (Time of Flight) values for UWB signals from a plurality of anchors installed in a vehicle and performing UWB communication with a plurality of digital keys; a computation unit that calculates distance values between the plurality of anchors and the at least one digital key using TOF values of a UWB signal generated through UWB communication with at least one digital key among the plurality of digital keys; and a location positioning unit that calculates location information with the at least one digital key using the distance values.

The communication unit may perform UWB communication with at least one first digital key located within a pre-set predetermined distance among the plurality of digital keys, and receive a plurality of TOF (Time of Flight) values for the UWB signal of each of the plurality of digital keys from the plurality of anchors.

The computation unit may calculate distance values for each of the plurality of anchors and each of the first digital keys, and the location positioning unit may calculate location information with the first digital key using the distance values, and calculate the final location information of the digital key using the calculated location information with the first digital key.

The communication unit may transmit to the first digital key an alarm regarding the existence of at least one second digital key among the plurality of digital keys that has deviated from the pre-set predetermined distance.

The communication unit may perform UWB communication with at least one first digital key among the plurality of digital keys whose distance change amount is equal to or greater than a pre-set reference value, and receive a plurality of TOF (Time of Flight) values for the UWB signal of each of the plurality of digital keys from the plurality of anchors.

The computation unit may calculate distance values for each of the plurality of anchors and each of the first digital keys, and the location positioning unit may calculate location information with the first digital key using the distance values, and calculate the final location information of the digital key using the calculated location information with the first digital key.

The communication unit may transmit to the first digital key an alarm regarding the existence of at least [at least] one second digital key among the plurality of digital keys whose distance change amount is less than the pre-set reference value.

The location positioning unit may calculate the final location information of the digital key using an average value of the location information with the plurality of digital keys.

The location positioning unit may assign a weight to each distance value according to the distance from the first digital key, and calculate an average value of the weighted distance values as the final location information of the digital key.

The location positioning unit may assign a weight to each according to the distance change amount of the first digital key, and calculate an average value of the weighted distance values as the final location information of the digital key.

### [ADVANTAGEOUS EFFECTS]

The digital key location positioning device according to the embodiment can improve the accuracy of location positioning.

Also, the driver can immediately determine whether the digital key is in possession.

### [DESCRIPTION OF DRAWINGS]

FIG. 1 is a conceptual diagram of a UWB system according to an embodiment.
FIG. 2 is a diagram illustrating a communication process of a plurality of UWB devices.
FIG. 3 is a configuration block diagram of a UWB device according to an embodiment.
FIG. 4 illustrates a Ranging process of a processor according to an embodiment.
FIG. 5 is a configuration block diagram of a digital key location positioning device according to an embodiment.
FIGS. 6 to 8 are diagrams for explaining the operation of the location positioning device according to an embodiment.
FIGS. 9 to 11 are operation flowcharts of the location positioning device according to an embodiment.

### [MODE FOR INVENTION]

Hereinafter, preferred embodiments of the present invention will be described in detail with reference to the accompanying drawings.

However, the technical idea of the present invention is not limited to some of the embodiments described herein, and may be embodied in various different forms; and within the scope of the technical idea of the present invention, one or more of the constituent elements among the embodiments may be selectively combined and substituted for use.

Also, terms used in the embodiments of the present invention (including technical and scientific terms), unless explicitly specifically defined and described, may be interpreted with meanings that are generally understood by a person of ordinary skill in the technical field to which the present invention belongs; and terms that are generally used, such as terms defined indictionaries, may be interpreted in consideration of the contextual meaning of the relevant technology.

Also, the terms used in the embodiments of the present invention are for describing the embodiments and are not intended to limit the present invention.

In this specification, the singular form may also include the plural form unless specifically stated otherwise in the phrase; and when described as "at least one (or one or more) of A and (or) B, C," it may include one or more of all combinations that can be combined as A, B, C.

Also, in describing the constituent elements of the embodiments of the present invention, terms such as first, second, A, B, (a), (b), etc. may be used.

These terms are only for distinguishing the constituent element from other constituent elements, and the nature, order, or sequence of the corresponding constituent element is not limited by the term.

And, when a constituent element is described as being 'connected', 'coupled', or 'joined' to another constituent element, it may include not only the case where that constituent element is directly connected, coupled, or joined to the other constituent element, but also the case where the constituent element is 'connected', 'coupled', or 'joined' due to yet another constituent element that exists between that constituent element and the other constituent element.

Also, when described as being formed or disposed "above (upper) or below (lower)" of each constituent element, "above (upper) or below (lower)" includes not only the case where two constituent elements are in direct contact with each other, but also the case where one or more other constituent elements are formed or disposed between the two constituent elements. Also, when expressed as "above (upper) or below (lower)," it may include not only the upward direction but also the downward direction based on one constituent element.

Hereinafter, the embodiments will be described in detail with reference to the accompanying drawings; and constituent elements that are the same or correspond to each other regardless of the reference numerals are assigned the same reference numbers, and duplicate descriptions thereof will be omitted.

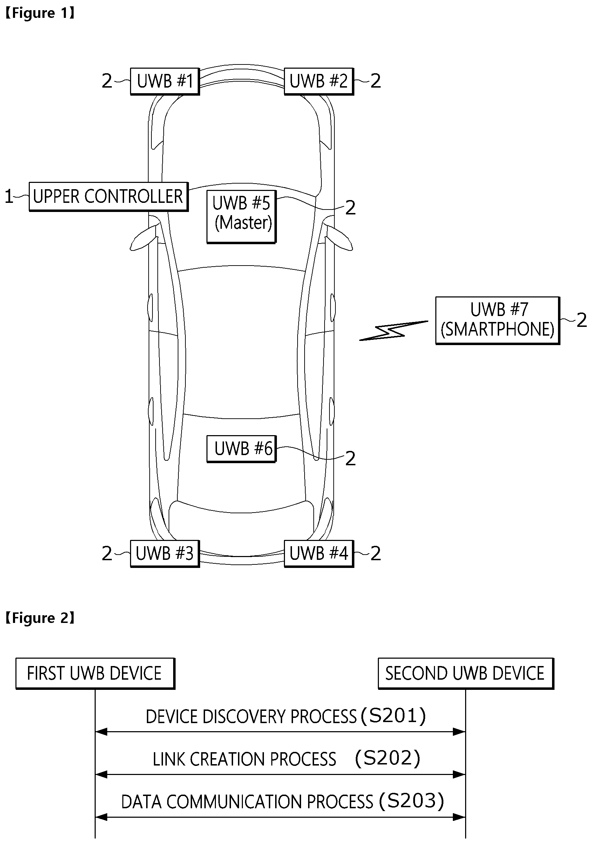

FIG. 1 is a conceptual diagram of a UWB system according to an embodiment.

UWB may refer to a short-range high-speed wireless communication technology that utilizes a wide frequency band of several GHz or more, low spectral density, and a short pulse width (1~4 nsec) in a baseband state. UWB may also refer to the band itself to which UWB communication is applied.

The UWB device (2) according to the embodiments may include a fixed terminal implemented as a computer device or a mobile terminal, and may communicate with other devices and/or servers using a wireless or wired communication method. For example, the UWB device (2) may include a smart phone, a mobile terminal, a laptop computer, a digital broadcasting terminal, a PDA (personal digital assistants), a PMP (portable multimedia player), a navigation device, a slate PC, a tablet PC, a desktop computer, a digital TV, a refrigerator, an artificial intelligence speaker, a wearable device, a projector, a digital key, a digital key, a smart car, a printer, an automotive console, a control device that controls at least some functions of a vehicle, etc., and is not limited to these examples.

In the embodiment, an example in which a UWB device is installed in a digital key or a smartphone and a vehicle will be described.

The UWB device (2) according to the embodiment may perform D2D (Device-to-Device) communication. D2D communication refers to a method in which geographically adjacent devices communicate directly without going through infrastructure such as a base station. In D2D communication, devices may communicate in 1:1, 1:many, or many:many configurations. D2D communication may use an unlicensed frequency band such as Wi-Fi Direct or Bluetooth. Alternatively, D2D communication may utilize a licensed frequency band to improve the frequency utilization efficiency of a cellular system. D2D communication is sometimes used in a limited sense to refer to communication between objects or machine intelligence communication; however, D2D communication in the present embodiment may include all communication between various types of devices equipped with communication functions, such as smartphones and personal computers, as well as simple devices equipped with communication functions.

In the embodiment, the upper controller (1) may determine the positions of a plurality of UWB devices using the ranging result values. The upper controller (1) may classify each UWB device (2) as a plurality of nodes, and analyze the position of each UWB device (2) according to the distance relationship between nodes. The upper controller (1) may set the plurality of UWB devices (2) installed in the vehicle as anchor nodes, set the UWB device (2) installed in the digital key as a tag node, and determine the position of each UWB device (2) according to the distance relationship between the anchor node and the tag node.

In the embodiment, one of the UWB devices (2) installed in a plurality of vehicles may be designated as a master UWB device (2), and the upper controller (1) may be configured as a vehicle Electronic Control Unit (ECU) or a Body Domain Controller (BDC).

FIG. 2 is a diagram illustrating a communication process of a plurality of UWB devices.

The first UWB device and the second UWB device may perform communication through a device discovery process, a link creation process, and a data communication process.

In the device discovery process, each of the first UWB device and the second UWB device may search for other UWB devices capable of D2D communication among UWB devices in its vicinity. Through this, each of the first UWB device and the second UWB device may decide whether to create a link for D2D communication. For example, the first UWB device may transmit a discovery signal so that the second UWB device can discover the first UWB device. Also, the first UWB device may receive the discovery signal transmitted by the second UWB device and confirm that other electronic devices capable of D2D communication are within the D2D communication range (S201).

In the link creation process, each of the first UWB device and the second UWB device may create a link for data transmission with the UWB device with which it wants to transmit data among the UWB devices discovered in the device discovery process. For example, the first UWB device may create a link for data transmission with the second UWB device discovered in the device discovery process (S202).

In the data communication process, each of the first UWB device and the second UWB device may transmit and receive data to and from the UWB devices with which the link was created in the link creation process. For example, the first UWB device may transmit and receive data to and from the second UWB device through the link created in the link creation process (S203).

Various embodiments of the present application relate to medium access control (MAC) based on D2D communication described above; and in order for medium access control, the distance between UWB devices needs to be measured. In this case, UWB ranging technology may be used to measure the distance between electronic devices.

In order to be a prerequisite for performing UWB-based Ranging, the UWB Initiator and Responder must know each other's ID information (MAC information) in order for ranging to be possible. The UWB Initiator and Responder may refer to the first UWB device and the second UWB device, respectively.

As shown in FIG. 2, ranging is possible only when the first UWB device and the second UWB device each know each other's MAC information, and thereafter UWB communication can begin. For ranging between the first UWB device and the second UWB device, information is exchanged between the devices using communication technology other than UWB. For ranging between the first UWB device and the second UWB device, BLE, WiFi, Zigbee, LTE, 5G, etc. other than UWB may be used; however, BLE (Bluetooth Low Energy) is typically used as the primary method for mobile support.

As shown in FIG. 2, the first UWB device and the second UWB device may perform the device discovery and link creation processes through a method of exchanging data multiple times by Bluetooth pairing.

Thereafter, the first UWB device and the second UWB device may perform Bluetooth pairing with each other, exchange key information with each other, and then perform ranging.

In the embodiment, Ranging refers to the act of measuring the distance between a UWB device (fob) and another UWB device (anchor); the data structure conforms to the IEEE 802.15.4z standard; and approximately 200 µs may be required for transmission of 1 packet.

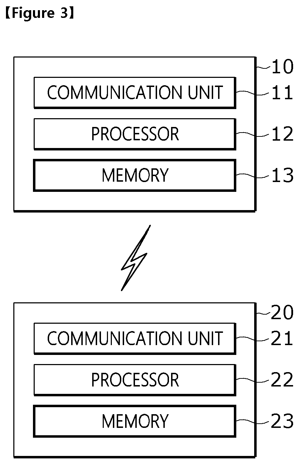

FIG. 3 is a configuration block diagram of the UWB device (10) according to an embodiment. Referring to FIG. 3, the UWB device (10) according to the embodiment performs ranging with another UWB device (20) through Ultra Wide Band (UWB), and may include a communication unit (11), at least one processor (12), and a memory (13) in which a UWB ranging program is embedded. Also, the other UWB device (20) may likewise be configured to include a communication unit (21), at least one processor (22), and a memory (23).

In the embodiment, the UWB device (10) is a UWB device installed in a vehicle and may function as an anchor; and the other UWB device (20) is a UWB device installed in a digital key and may function as a fob.

The communication unit (11) performs data communication with the upper controller (1) to transmit ranging results and may receive a Localization result from the upper controller (1). The communication unit (11) may perform data communication with the upper controller (1) through an L-CAN bus, and may transmit ranging results to the upper controller (1). Also, it may receive the localization result from the upper controller (1) through the L-CAN bus.

The processor (12) performs ranging with the other UWB device (20) through Ultra Wide Band (UWB), and may measure the distance to the other UWB device (20).

For example, when using a digital key stored in a smartphone to open and close a vehicle door, the vehicle may measure the distance between the smartphone and the vehicle respectively by utilizing a plurality of UWB devices (10) (for example, 8 UWB communication modules), and estimate the position of the smartphone based on the measurement results. The vehicle may automatically open the vehicle door when the vehicle and the smartphone come within a predetermined distance or less, thereby increasing user convenience. The vehicle and the smartphone may utilize multicast ranging or broadcast ranging.

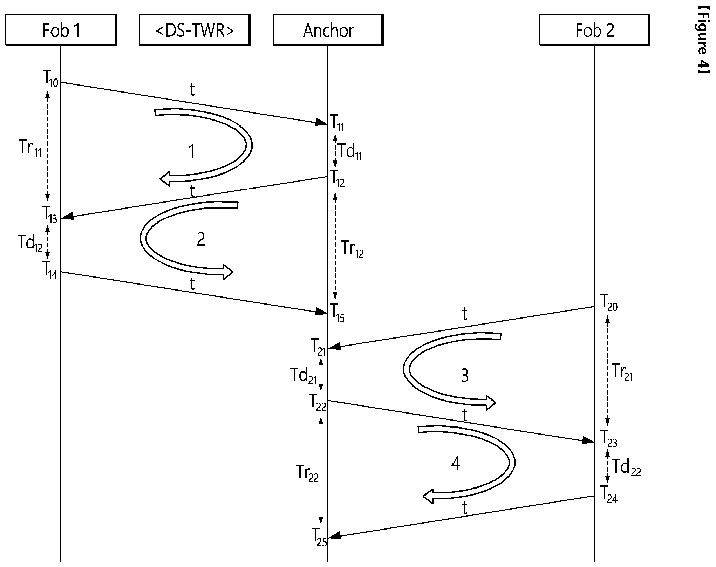

FIG. 4 is a diagram illustrating the Ranging process of a processor according to an embodiment.

FIG. 4 shows TWR (Two Way Ranging), which includes DS (Double Sided) TWR and SS (Single Sided) TWR.

Ranging refers to the act of measuring the distance between one fob and one anchor; the data structure conforms to the IEEE 802.15.4z standard; and approximately 200 µs may be required for transmission of 1 packet.

In the embodiment, the UWB device (10) may operate as an anchor. When the UWB device (10) according to the embodiment operates as an anchor, the other UWB device (20) may operate as a fob.

The location positioning device according to the embodiment may perform UWB ranging using a plurality of fobs and a plurality of anchors. Accordingly, one anchor may perform TWR with a plurality of fobs. In the embodiment of FIG. 4, the process of performing TWR using two fobs will be described as an example.

A Slot may be defined as the time from when a fob or anchor transmits (or receives) a signal once to the next transmission (or reception).

First, the first fob (Fob 1) transmits a poll packet and records the timestamp T₁₀.

Next, the anchor (Anchor) receives the poll packet from the first fob and records T₁₁.

Next, the anchor takes time T_{d11} to receive the signal and generate a response packet, sends a response message, and records T₁₂.

Next, the first fob receives the response message and records T₁₃.

Next, the first fob takes time T_{d12} to receive the signal and generate a final message.

Next, the first fob sends the final message and records T₁₄, and the anchor receives the final message and records T₁₅.

The distance value between the first fob and the anchor can be calculated according to Equation 1 below. [Equation 1] ${R}_{1} = C \times \frac{\left({T}_{r 11}-{T}_{d 11}\right) - \left({T}_{r 12}-{T}_{d 12}\right)}{3}$

(In Equation 1, R1 is the distance between the first fob and the anchor, and C is the speed of light.)

Next, the second fob (Fob 2) transmits a poll packet and records the timestamp T₂₀.

Next, the anchor receives the poll packet from the second fob and records T₂₁.

Next, the anchor takes time T_{d21} to receive the signal and generate a response packet, sends a response message, and records T₂₂.

Next, the second fob receives the response message and records T₂₃.

Next, the second fob takes time T_{d22} to receive the signal and generate a final message.

Next, the second fob sends the final message and records T₂₄, and the anchor receives the final message and records T₂₅.

The distance value between the second fob and the anchor can be calculated according to Equation 2 below. [Equation 2] ${R}_{2} = C \times \frac{\left({T}_{r 21}-{T}_{d 21}\right) - \left({T}_{r 22}-{T}_{d 22}\right)}{3}$

(In Equation 2, R2 is the distance between the second fob and the anchor, and C is the speed of light.)

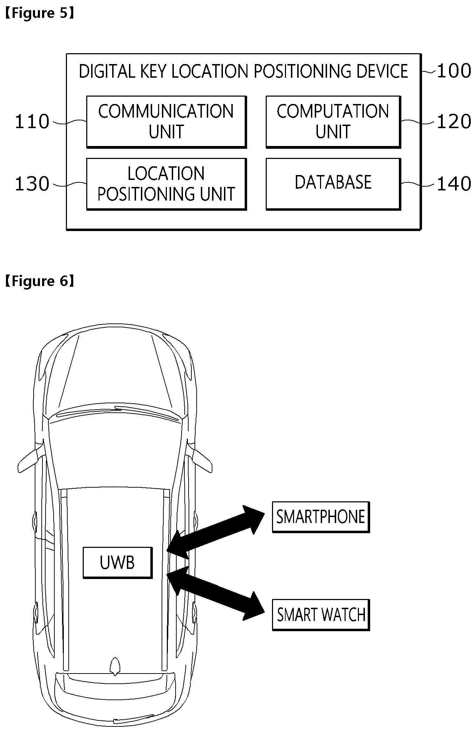

FIG. 5 is a configuration block diagram of the digital key location positioning device according to an embodiment.

Referring to FIG. 5, the digital key location positioning device (100) according to the embodiment may include a communication unit (110), a computation unit (120), a location positioning unit (130), and a database (140).

The communication unit (110) may receive a plurality of TOF (Time of Flight) values for UWB signals from a plurality of anchors installed in the vehicle and performing UWB communication with the digital key.

In the embodiment, the location positioning device (100) may refer to one anchor among a plurality of anchors installed in the vehicle; and the anchor designated as the location positioning device (100), as a master anchor, may receive a plurality of TOF (Time of Flight) values for UWB signals between the digital key and the other plurality of anchors including itself, and use these to perform positioning of the digital key.

The communication unit (110) may receive a plurality of TOF values for UWB signals from a plurality of anchors installed in the vehicle and performing UWB communication with the digital key.

The communication unit (110) may receive a plurality of TOF values through the aforementioned device discovery process, link creation process, and data communication process.

The communication unit (110) may perform data communication with the digital key, the anchor, and an external server. For example, the communication unit (110) may perform data communication using long-range communication technologies such as Wireless LAN (WLAN), Wi-Fi, Wireless Broadband (Wibro), Worldwide Interoperability for Microwave Access (WiMAX), HSDPA (High Speed Downlink Packet Access), IEEE 802.16, Long Term Evolution (LTE), Wireless Mobile Broadband Service (WMBS), etc.

Alternatively, the communication unit (110) may include Bluetooth, RFID (Radio Frequency Identification), Infrared Data Association (IrDA), UWB (Ultra Wideband), Zigbee, Near Field Communication (NFC), etc. Also, as wired communication technology, data communication may be performed using short-range communication technologies such as USB communication, Ethernet, serial communication, optical/coaxial cable, etc.

For example, the communication unit (110) may perform data communication with the anchor and the digital key using short-range communication technology, and perform data communication with an external server using long-range communication technology; however, it is not limited thereto, and various communication technologies may be used in consideration of relevant matters.

FIGS. 6 to 8 are diagrams for explaining the operation of the location positioning device according to an embodiment.

Referring to FIG. 6 together, the communication unit (110) may perform UWB communication with a plurality of first digital keys and receive a plurality of TOF values for the UWB signal of each of the plurality of digital keys from a plurality of anchors. In FIG. 6, the first digital key may include a smartphone and a smart watch.

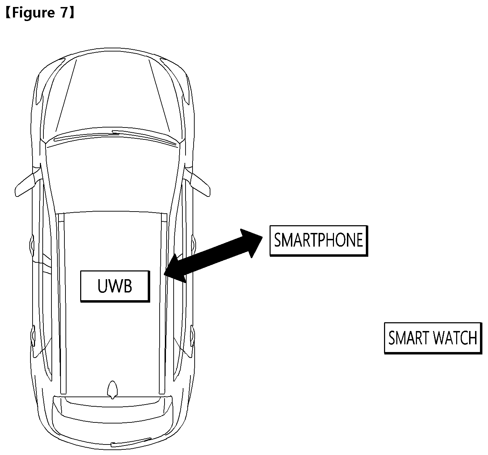

Referring to FIG. 7 together, the communication unit (110) may perform UWB communication with at least one first digital key located within a pre-set predetermined distance among the plurality of digital keys, and receive a plurality of TOF values for the UWB signal of each of the plurality of digital keys from a plurality of anchors. Here, the predetermined distance may mean the distance from the location positioning device and the distance between the first digital keys. That is, the communication unit (110) may identify a digital key that has come within a pre-set first distance from the location positioning device, and may recognize as the first digital key the digital key whose distance from the identified digital key is within a pre-set second distance. The communication unit (110) may perform UWB communication with the recognized first digital key, and may receive, according to the UWB communication result, a plurality of TOF values for the UWB signal of each of the plurality of first digital keys from the plurality of anchors. The location positioning device according to the embodiment may determine digital keys located adjacent to each other within a predetermined distance, and then perform location positioning using the TOF signal values of the determined plurality of digital keys.

The communication unit (110) may transmit to the first digital key an alarm regarding the existence of at least one second digital key among the plurality of digital keys that has deviated from the pre-set predetermined distance. That is, the communication unit (110) may recognize a second digital key whose distance from the location positioning device has deviated from the pre-set first distance and/or a second digital key whose distance from the first digital key has deviated from the pre-set second distance, among the digital keys capable of UWB communication, and may transmit an alarm regarding this to the first digital key. Through this, the driver who possesses the first digital key can recognize the possession status or location of the second digital key. In FIG. 7, the first digital key may be a smartphone, and the second digital key may be a smart watch.

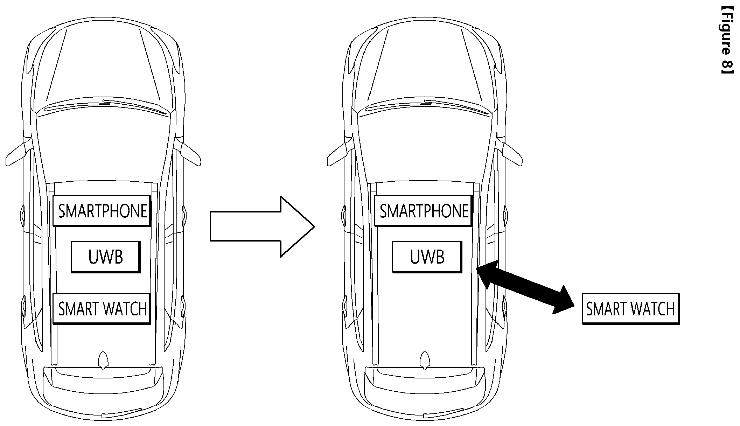

Referring to FIG. 8 together, the communication unit (110) may perform UWB communication with at least one first digital key among the plurality of digital keys whose distance change amount is equal to or greater than a pre-set reference value, and receive a plurality of TOF values for the UWB signal of each of the plurality of digital keys from a plurality of anchors. The distance change amount may be determined according to UWB ranging results performed at predetermined intervals. The communication unit (110) may recognize a digital key whose distance change amount is equal to or greater than the pre-set reference value as the first digital key. The communication unit (110) may perform UWB communication with the recognized first digital key, and may receive, according to the UWB communication result, a plurality of TOF values for the UWB signal of each of the plurality of first digital keys from the plurality of anchors. The location positioning device according to the embodiment may determine a plurality of digital keys that are being moved while in possession by the user, and perform location positioning using the TOF signal values of the determined plurality of digital keys.

The communication unit (110) may transmit to the first digital key an alarm regarding the existence of at least [at least] one second digital key among the plurality of digital keys whose distance change amount is less than the pre-set reference value. That is, the communication unit (110) may recognize, among the digital keys capable of UWB communication, the di digital key whose distance change amount is less than a certain value as the second digital key, and may transmit an alarm regarding this to the first digital key. Through this, the driver who possesses the first digital key can recognize the possession status or location of the second digital key. In FIG. 8, the first digital key may be a smartphone, and the second digital key may be a smart watch.

The computation unit (120) may calculate distance values between the plurality of anchors and the at least one digital key using the TOF values of the UWB signal generated through UWB communication with at least one digital key among the plurality of digital keys.

The computation unit (120) may calculate the distance values between the plurality of anchors and the digital key through the UWB ranging technology and Equation 1 described above.

The location positioning unit (130) may calculate the location information of the digital key using the plurality of distance values.

For example, the location positioning unit (130) may calculate the location information of the digital key by applying trilateration technology using the distance values between the plurality of anchors and the plurality of fobs.

The location information of the digital key may be transmitted to a vehicle Electronic Control Unit (ECU) or a Body Domain Controller (BDC) and used for automatic unlocking control of the vehicle.

The computation unit (120) may calculate distance values for each of the plurality of anchors and each of the first digital keys; and the location positioning unit (130) may calculate location information with the first digital key using the distance values. The location positioning unit (130) may calculate the final location information of the digital key using the calculated location information with the first digital key. In the embodiment, the final location information of the digital key may mean the result of location positioning on the assumption that the plurality of first digital keys are a single digital key object. That is, the final location information of the digital key may mean the location information of a driver who is moving while possessing a plurality of digital keys.

For example, the location positioning unit (130) may calculate an average value of the distance values of the first digital key as the final location information of the digital key. That is, the location positioning unit (130) may compensate for errors that may occur during individual digital key location positioning by averaging each of the distance values and calculating this as the final location information.

Alternatively, the location positioning unit (130) may assign a weight to each distance value according to the distance from the first digital key, and calculate an average value of the weighted distance values as the final location information of the digital key. That is, the location positioning unit (130) may differentially assign a relatively higher weight to the distance value of the first digital key calculated to be close to the anchor, and calculate an average value of the weighted distance values as the final location information of the digital key. Through this, by assigning a higher weight to the distance value of the first digital key located adjacent to the anchor, the accuracy of the final location information of the digital key can be improved.

Alternatively, the location positioning unit (130) may assign a weight to each according to the distance change amount of the first digital key, and calculate an average value of the weighted distance values as the final location information of the digital key. That is, the location positioning unit (130) may differentially assign a relatively higher weight to the distance value of the first digital key having a large distance change amount, and calculate an average value of the weighted distance values as the final location information of the digital key. In the case of wearable devices, since they are generally mounted on the driver's body in a state exposed to the external environment, they can provide a relatively accurate distance value compared to a smartphone that is carried in a bag or pocket. Therefore, by assigning a higher weight to the distance value of the first digital key provided in the wearable device, which has a relatively large distance change amount, the accuracy of the final location information of the digital key can be improved.

The database (140) may include at least one storage medium among flash memory type, hard disk type, multimedia card micro type, card-type memory (e.g., SD or XD memory, etc.), magnetic memory, magnetic disk, optical disk, RAM (Random Access Memory), SRAM (Static Random Access Memory), ROM (Read-Only Memory), EEPROM (Electrically Erasable Programmable Read-Only Memory), and PROM (Programmable Read-Only Memory). Also, the location positioning device (100) may operate a web storage that performs the storage function of the database (140) on the Internet, or may operate in connection with the web storage.

The database (140) may store user personal information collected from an external server, a matching table, and various parameters of learning models. Also, the database (140) may store data and programs necessary for the digital key location positioning device (100) to operate.

Also, the database (140) may store various user interfaces (UI) or graphic user interfaces (GUI).

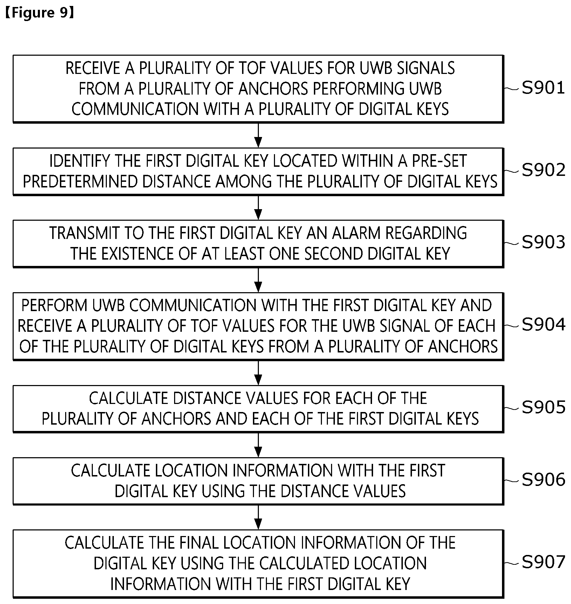

FIG. 9 is an operation flowchart of the location positioning device according to an embodiment.

Referring to FIG. 9, first, the communication unit may receive a plurality of TOF values for UWB signals from a plurality of anchors performing UWB communication with a plurality of digital keys (S901).

Next, the communication unit may identify the first digital key located within a pre-set predetermined distance among the plurality of digital keys (S902).

At this time, the communication unit may transmit to the first digital key an alarm regarding the existence of at least one second digital key among the plurality of digital keys that has deviated from the pre-set predetermined distance (S903).

Next, the communication unit may perform UWB communication with the first digital key identified through the aforementioned process and receive a plurality of TOF values for the UWB signal of each of the plurality of digital keys from a plurality of anchors (S904).

Next, the computation unit may calculate distance values for each of the plurality of anchors and each of the first digital keys (S905).

Next, the location positioning unit may calculate location information with the first digital key using the distance values (S906).

Next, the location positioning unit may calculate the final location information of the digital key using the calculated location information with the first digital key (S907).

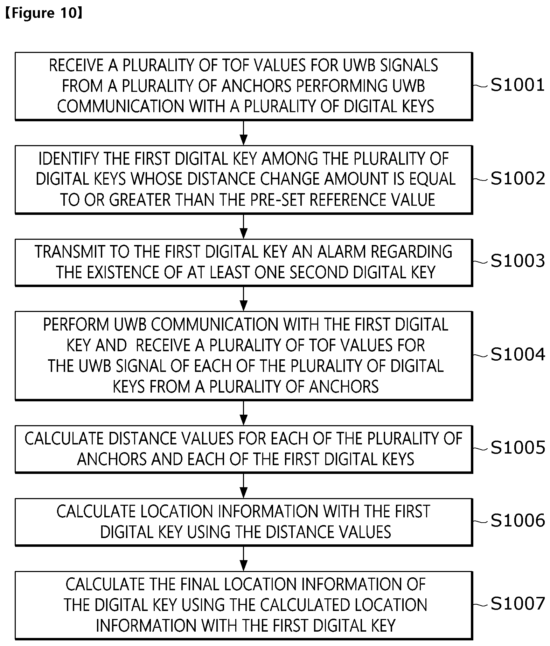

FIG. 10 is an operation flowchart of the location positioning device according to an embodiment.

Referring to FIG. 10, first, the communication unit may receive a plurality of TOF values for UWB signals from a plurality of anchors performing UWB communication with a plurality of digital keys (S1001).

Next, the communication unit may identify the first digital key among the plurality of digital keys whose distance change amount is equal to or greater than the pre-set reference value (S1002).

At this time, the communication unit may transmit to the first digital key an alarm regarding the existence of the second digital key among the plurality of digital keys whose distance change amount is less than the pre-set reference value (S1003).

Next, the communication unit may perform UWB communication with the first digital key identified through the aforementioned process and receive a plurality of TOF values for the UWB signal of each of the plurality of digital keys from a plurality of anchors (S1004).

Next, the computation unit may calculate distance values for each of the plurality of anchors and each of the first digital keys (S1005).

Next, the location positioning unit may calculate location information with the first digital key using the distance values (S1006).

Next, the location positioning unit may calculate the final location information of the digital key using the calculated location information with the first digital key (S1007).

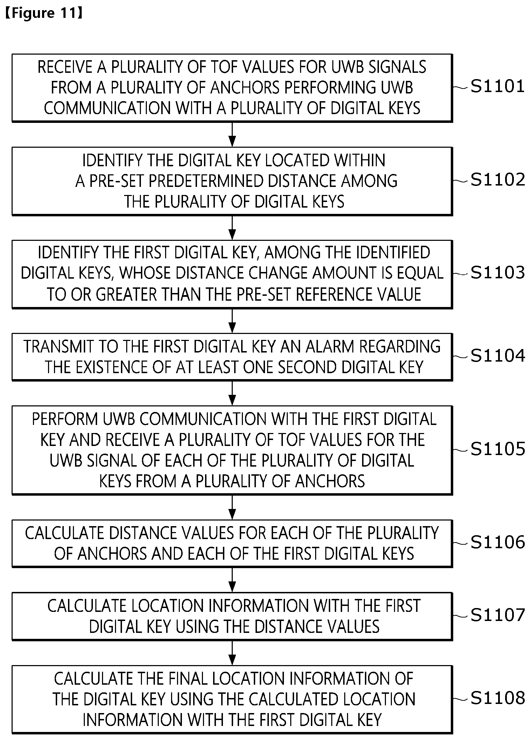

FIG. 11 is an operation flowchart of the location positioning device according to an embodiment.

Referring to FIG. 11, first, the communication unit may receive a plurality of TOF values for UWB signals from a plurality of anchors performing UWB communication with a plurality of digital keys (S1101).

Next, the communication unit may identify the digital key located within a pre-set predetermined distance among the plurality of digital keys (S1102).

Next, the communication unit may identify the first digital key, among the identified digital keys, whose distance change amount is equal to or greater than the pre-set reference value (S1103).

At this time, the communication unit may identify, among the plurality of digital keys, a digital key that has deviated from the pre-set predetermined distance or a digital key whose distance change amount is less than the pre-set reference value as the second digital key, and may transmit to the first digital key an alarm regarding the existence of the second digital key (S1104).

Next, the communication unit may perform UWB communication with the first digital key identified through the aforementioned process and receive a plurality of TOF values for the UWB signal of each of the plurality of digital keys from a plurality of anchors (S1105).

Next, the computation unit may calculate distance values for each of the plurality of anchors and each of the first digital keys (S1106).

Next, the location positioning unit may calculate location information with the first digital key using the distance values (S1107).

Next, the location positioning unit may calculate the final location information of the digital key using the calculated location information with the first digital key (S1108).

The term '~unit' used in this embodiment means a software or hardware component such as an FPGA (field-programmable gate array) or ASIC, and '~unit' performs certain roles. However, '~unit' does not mean limited to software or hardware. A '~unit' may be configured to reside in an addressable storage medium, or may be configured to reproduce one or more processors. Thus, as an example, '~unit' includes components such as software components, object-oriented software components, class components, and task components; and processes, functions, attributes, procedures, subroutines, segments of program code, drivers, firmware, microcode, circuits, data, databases, data structures, tables, arrays, and variables. Functions provided within components and '~units' may be combined into a smaller number of components and '~units,' or may be further separated into additional components and '~units.' In addition, components and '~units' may be implemented to reproduce one or more CPUs in a device or secure multimedia card.

Although the description above has been made with reference to preferred embodiments of the present invention, a person skilled in the relevant technical field will understand that various modifications and changes may be made to the present invention within a range that does not depart from the spirit and scope of the present invention as described in the following claims.

## Claims

1. A digital key location positioning device comprising: a communication unit installed in a vehicle, receiving a plurality of TOF (Time of Flight) values for UWB signals from a plurality of anchors performing UWB communication with a plurality of digital keys; a computation unit calculating distance values between the plurality of anchors and the at least one digital key using TOF values of a UWB signal generated through UWB communication with at least one digital key among the plurality of digital keys; and a location positioning unit calculating location information with the at least one digital key using the distance values.

2. The digital key location positioning device of claim 1, wherein the communication unit performs UWB communication with at least one first digital key located within a pre-set predetermined distance among the plurality of digital keys, and receives a plurality of TOF (Time of Flight) values for the UWB signal of each of the plurality of digital keys from the plurality of anchors.

3. The digital key location positioning device of claim 2, wherein the computation unit calculates distance values for each of the plurality of anchors and each of the first digital keys, and the location positioning unit calculates location information with the first digital key using the distance values, and calculates the final location information of the digital key using the calculated location information with the first digital key.

4. The digital key location positioning device of claim 2, wherein the communication unit transmits to the first digital key an alarm regarding the existence of at least one second digital key among the plurality of digital keys that has deviated from the pre-set predetermined distance.

5. The digital key location positioning device of claim 1, wherein the communication unit performs UWB communication with at least one first digital key among the plurality of digital keys whose distance change amount is equal to or greater than a pre-set reference value, and receives a plurality of TOF (Time of Flight) values for the UWB signal of each of the plurality of digital keys from the plurality of anchors.

6. The digital key location positioning device of claim 5, wherein the computation unit calculates distance values for each of the plurality of anchors and each of the first digital keys, and the location positioning unit calculates location information with the first digital key using the distance values, and calculates the final location information of the digital key using the calculated location information with the first digital key.

7. The digital key location positioning device of claim 6, wherein the communication unit transmits to the first digital key an alarm regarding the existence of at least [at least] one second digital key among the plurality of digital keys whose distance change amount is less than the pre-set reference value.

8. The digital key location positioning device of at least one of claims 2 to 7, wherein the location positioning unit calculates the final location information of the digital key using an average value of the location information with the plurality of digital keys.

9. The digital key location positioning device of at least one of claims 2 to 7, wherein the location positioning unit assigns a weight to each distance value according to the distance from the first digital key, and calculates an average value of the weighted distance values as the final location information of the digital key.

10. The digital key location positioning device of at least one of claims 2 to 7, wherein the location positioning unit assigns a weight to each according to the distance change amount of the first digital key, and calculates an average value of the weighted distance values as the final location information of the digital key.
